# EUROPÄISCHE PATENTANMELDUNG

(11) **EP 2 660 709 A1**
(43) Veröffentlichungstag der Anmeldung: **06.11.2013**
(21) Anmeldenummer: 13166035.9
(22) Anmeldetag: 30.04.2013
(51) Int. Cl.: G06F 3/12

(54) **Verfahren zur Verfolgung von Sendungen bei deren Erzeugung und Vorrichtung zur Erzeugung einer Mehrzahl von Sendungen**

(30) Priorität: 02.05.2012 DE 102012207289
(71) Anmelder: BÖWE SYSTEC GmbH, 86159 Augsburg (DE)
(72) Erfinder: Meinelt, Wolfgang, 86179 Augsburg (DE)
(74) Vertreter: Zimmermann, Tankred Klaus

(57) **Zusammenfassung**

Bei einem Verfahren zur Verfolgung von Sendungen bei deren Erzeugung durch eine oder mehrere Verarbeitungsanlagen (100, 102), wird eine Mehrzahl von Originalaufträgen bereitgestellt, wobei jeder der Originalaufträge eine Mehrzahl von zu erzeugenden Sendungen umfasst. Abhängig von vorbestimmten Eigenschaften der Sendungen, wird zumindest ein Verarbeitungsauftrag (111) erzeugt, wobei der Verarbeitungsauftrag (111) zumindest eine zu erzeugende Sendung aus unterschiedlichen Originalaufträgen umfasst. Der Verarbeitungsauftrag (111) wird durch die eine oder die mehreren Verarbeitungsanlagen (100, 102) verarbeitet, um die jeweiligen Sendungen aus den Originalaufträgen zu erzeugen. Jede zu erzeugende Sendung in den Originalaufträgen wird der entsprechenden Sendung in dem Verarbeitungsauftrag (111) eindeutig zugeordnet, um basierend auf der Zuordnung die Verfolgung einer Sendung aus dem Originalauftrag während deren Verarbeitung zu ermöglichen.

## Beschreibung

Die vorliegende Erfindung betrifft ein Verfahren zur Verfolgung von Sendungen bei deren Erzeugung durch eine oder mehrere Verarbeitungsanlagen sowie eine Vorrichtung zur Erzeugung einer Mehrzahl von Sendungen. Insbesondere bezieht sich die vorliegende Erfindung auf einen Ansatz zur Sendungsverfolgung von Einzelsendungen aus einem oder mehreren Aufträgen, die zur Optimierung der Verarbeitung durch eine oder mehrere Verarbeitungsanlagen in einen oder mehrere Verarbeitungsaufträge zur Abarbeitung durch die Verarbeitungsanlage verteilt wurden.

Im Stand der Technik bekannte Papierhandhabungsanlagen werden verwendet, um ausgehend von bereitgestellten Eingangsdaten beispielsweise eine Sendung umfassend eine oder mehrere bedruckte Seiten zu erzeugen, beispielsweise durch Drucken der entsprechenden Einzelblätter, die dann gegebenenfalls mit weiteren Beilagen, die beigefügt werden, kuvertiert und sortiert werden, um anschließend an einen Empfänger weitergeleitet werden. Ein Dienstanbieter, ein sogenannter Mailroom-Service, kann eine oder mehrere solcher Verarbeitungsanlagen betreiben, um Aufträge, die durch unterschiedliche Kunden erteilt werden, abzuarbeiten. Solche Aufträge umfassen die erforderlichen Informationen zur Erzeugung der Sendungen durch den Dienstanbieter, der die Informationen von dem Auftraggeber beispielsweise in elektronischer Form erhält, die Sendungen erzeugt und für den Versand an den Empfänger vorbereitet. Die von einem oder mehreren Kunden empfangenen Aufträge enthalten unterschiedliche Sendungen, d.h. Sendungen, die sich hinsichtlich des Aufdrucks, der Anzahl der Blätter und ähnlichem unterscheiden, so dass durch den Dienstanbieter Aufträge von unterschiedlichen Kunden für die Verarbeitung durch eine Verarbeitungsanlage zusammengefasst werden, die entweder für die Verarbeitung dieser Aufträge gut geeignet ist oder entsprechend eingestellt werden kann. Andere Aufträge werden ebenfalls neu zusammengefasst, und der Verarbeitungsanlage bereitgestellt, die dann entsprechend neu eingestellt wird, oder diese anderen Aufträge werden einer anderen passenden Verarbeitungsanlage bereitgestellt. Hierdurch wird eine optimale Ausnutzung der Verarbeitungsanlagen gewährleistet. Ferner kann vorgesehen sein, Aufträge von den verschiedenen Kunden, die das gleiche Zielgebiet, z.B. den gleichen Postleitzahlenbereich, als Empfänger angeben, zusammenzufassen und zu verarbeiten, wodurch ein Sortieren nach dem Kuvertieren nicht mehr erforderlich ist.

Somit ist es aufgrund der Optimierung bei der Verarbeitung der Sendungen und bei deren Versand wünschenswert, die von den verschiedenen Kunden erhaltenen Aufträge möglichst zusammenzufassen. Die in den oben erwähnten Verarbeitungsanlagen verwendeten Drucker ermöglichen einen Vollfarbdruck, so dass die Sendungen von unterschiedlichen Kunden auf einer Rolle zusammengefasst werden können, da nun für die unterschiedlichen Kunden die entsprechenden Briefbögen, soweit erwünscht, erzeugt werden können. Auch bei der Bedruckung eines Kuverts besteht die Möglichkeit, Firmenlogos oder Werbung auf ein weißes Kuvert zu drucken, und im Rahmen der Abarbeitung eines Auftrags neben den zu erzeugenden Einzelblättern auch das erforderliche Kuvert auftragsspezifisch zu erzeugen. Bei dem Dienstanbieter ermöglicht dies eine Vereinfachung der Logistik, da nur weißes Papier und weißes Kuvert vorrätig gehalten werden muss. Weiteres Einsparpotenzial ergibt sich bei der Erzeugung bzw. Produktion der Sendungen selbst, nämlich dann, wenn eine möglichst große Anzahl von Sendungen ohne große Umrüstzeiten am Stück gefertigt werden kann. Beispielsweise können Sendungen mit großen Sammelmengen auftragsübergreifend in einer Verarbeitung zusammengefasst werden. Die Notwendigkeit, die Aufträge zu trennen, ergibt sich hierbei meistens aufgrund der technischen Möglichkeiten der in der Verarbeitungsanlage eingesetzten Maschinen. Ein weiteres großes Einsparpotenzial ergibt sich aus der Optimierung des Portos durch eine geeignete Sortierung der Aufträge und durch eine geeignete Wahl des Zulieferers, gegebenenfalls nach tagesaktuellen Regeln.

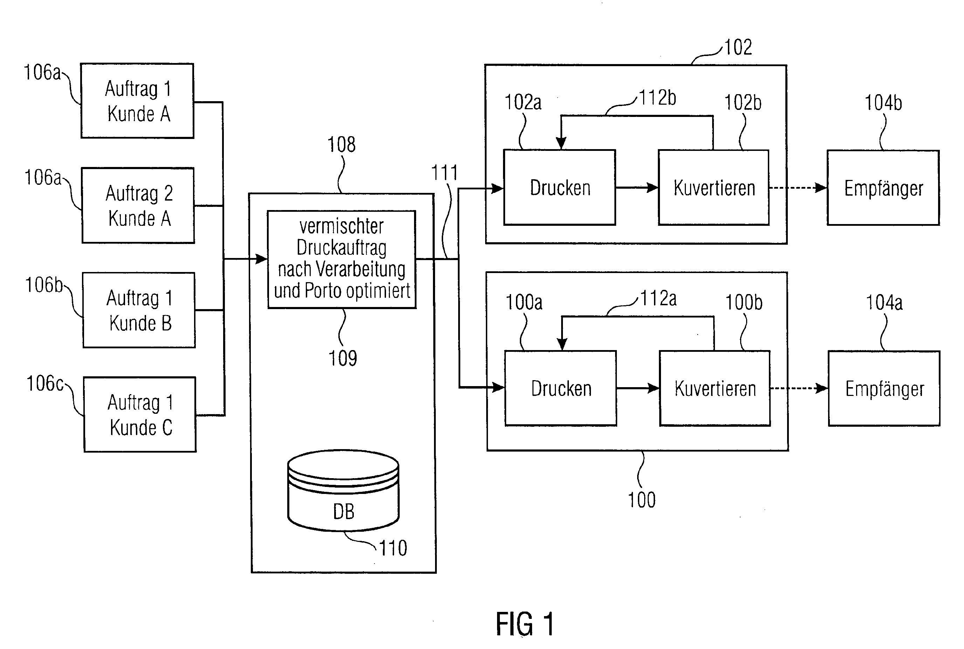

Fig. 1 zeigt schematisch einen sogenannten Mailroom, der durch einen Dienstanbieter oder Dienstleister betrieben wird, und der eine erste Verarbeitungsanlage 100 und eine zweite Verarbeitungsanlage 102 umfasst, die jeweils einen Drucker 100a, 102a sowie einen Kuvertierer 100b und 102b umfassen. Die Verarbeitungsanlagen 100, 102 erzeugen Sendungen, die an die jeweiligen Empfänger 104a, 104b weitergeleitet werden, beispielsweise durch einen Zulieferer, der die durch die Anlagen 100, 102 erzeugten Sendungen übernimmt und an die Empfänger 104a, 104b ausliefert. Der Mailroom-Dienstleister empfängt von seinen Kunden 106a, 106b, 106c jeweils Aufträge zur Erzeugung von Sendungen, wobei solche Sendungen typischerweise ein oder mehrere bedruckte Einzelblätter umfassen, die in einem Kuvert an die Empfänger 104a und 104b übersandt werden sollen. Die Aufträge der Kunden 106a und 106c enthalten die erforderlichen Informationen zur Erzeugung der Einzelblätter sowie Informationen über das Zielgebiet, die zu verwendenden Kuverts und ähnliches. Die Aufträge werden durch den Dienstleister an einer Steuerung 108 empfangen, die einer Verarbeitungseinrichtung 108, z.B. einen Rechner oder Computer, und eine Datenbank 110 umfasst. Die empfangenen Aufträge werden überprüft und hinsichtlich einer Optimierung bei der Verarbeitung und beim Versand derselben zu einem oder mehreren vermischten Druckaufträgen 111 zusammengefasst, die beispielsweise hinsichtlich der Verarbeitung und/oder hinsichtlich des Portos optimiert sind. Beispielsweise kann ein erster vermischter Druckauftrag für eine Verarbeitung von Sendungen durch die erste Verarbeitungsanlage 100 erzeugt werden, und ein zweiter vermischter Druckauftrag kann für eine Verarbeitung der in diesem enthaltenen Sendungen durch die zweite Verarbeitungsanlage 102 erzeugt werden. Alternativ kann für eine bestimmte Anzahl von Aufträgen ein gemeinsamer vermischter Druckauftrag erzeugt werden, dessen Daten abhängig von der erwünschten Optimierung entweder an die erste Verarbeitungsanlage 100 oder an die zweite Verarbeitungsanlage 102 weitergegeben werden.

In den jeweiligen Verarbeitungsanlagen 100, 102 wird basierend auf den den Sendungen in dem vermischten Druckauftrag zugeordneten Daten durch die Drucker 100a, 102a die Sendung, insbesondere deren Einzelblätter, erzeugt. Die erzeugten Blätter werden an den Kuvertierer 100b, 102b übergeben, der die erzeugten Blätter gegebenenfalls mit weiteren, vor dem Kuvertieren beigefügten Beilagen in ein Kuvert einbringt. Das erzeugte Poststück wird an einen Zulieferer zur Auslieferung an den Empfänger 104a, 104b übergeben. Basierend auf den Informationen in dem Druckauftrag kann ferner vorgesehen sein, ein Kuvert individuell für eine Sendung zu bedrucken und dem Kuvertierer zusammen mit den zu kuvertierenden Einzelblättern bereitzustellen. Im Fall eines Fehlers beim Kuvertieren kann, wie durch die Pfeile 112a, 112b angedeutet ist, ein Neudruck einer oder mehrerer der Sendungen bewirkt werden, beispielsweise dann, wenn das Drucken, das Kuvertieren oder eine sonstige Verarbeitung nachfolgend zu dem Drucken fehlerhaft war, so dass die Sendung nicht vollständig oder nicht korrekt erzeugt wurde und daher nicht an den Empfänger weitergegeben werden kann.

Die vermischten Druckaufträge können beispielsweise einen ersten vermischten Druckauftrag enthalten, der eine Mehrzahl von Sendungen von unterschiedlichen Kunden enthält, die jeweils eine erste Kuvertgröße wünschen, die durch einen Kuvertierer in der Anlage 100 verarbeitet werden können. Ein zweiter vermischter Druckauftrag kann z.B. mehrere Sendungen der Kunden enthalten, jedoch ein kleineres Kuvertformat benötigen. Dieser Auftrag kann entweder durch die Anlage 100 nach deren Umrüstung abgearbeitet werden oder, sofern mehrere Anlagen vorhanden sind, an die Anlage 102 weitergegeben werden, die diese Kuvertgröße verarbeiten kann. Anstelle der Erzeugung von zwei vermischten Druckaufträgen können die von einem oder mehreren Kunden erhaltenen Aufträge auch in einem gemeinsam vermischten Druckauftrag eingebracht werden, dessen Daten dann abhängig von der Kuvertgröße an die entsprechenden Anlagen 100, 102 weitergegeben werden.

Somit lässt sich auf die oben beschriebene Art und Weise eine optimierte Verarbeitung und/oder ein optimierter Versand von Sendungen, die von Aufträgen eines oder mehrerer Kunden stammen, erreichen.

Die oben beschriebene Vermischung der Sendungen aus den verschiedenen Aufträgen der Kunden erschwert es einem Dienstleister jedoch, einem Auftraggeber Informationen über den Status eines Auftrags mitzuteilen, insbesondere Informationen hinsichtlich des Fortschritts bei der Erzeugung der einzelnen Sendungen, deren Fertigstellung und deren Qualität.

Ausgehend hiervon liegt der vorliegenden Erfindung die Aufgabe zugrunde, einen Ansatz zu schaffen, der es ermöglicht, Sendungen, die aus einem ursprünglichen Auftrag in einen vermischten Druckauftrag überführt wurden, der Sendungen unterschiedlicher Ursprungsaufträge enthält, nachzuverfolgen.

Diese Aufgabe wird durch ein Verfahren gemäß Anspruch 1 oder 2, und durch eine Vorrichtung gemäß Anspruch 21 gelöst.

Die vorliegende Erfindung schafft ein Verfahren zur Verfolgung von Sendungen bei deren Erzeugung durch eine oder mehrere Verarbeitungsanlagen, mit folgenden Schritten:
Bereitstellen einer Mehrzahl von Originalaufträgen, wobei jeder der Originalaufträge eine Mehrzahl von zu erzeugenden Sendungen umfasst;
abhängig von vorbestimmten Eigenschaften der Sendungen, Erzeugen zumindest eines Verarbeitungsauftrags, wobei der Verarbeitungsauftrag zumindest eine zu erzeugende Sendung aus unterschiedlichen Originalaufträgen umfasst; und
Verarbeiten des Verarbeitungsauftrags durch die eine oder die mehreren Verarbeitungsanlagen, um die jeweiligen Sendungen aus den Originalaufträgen zu erzeugen;
wobei jede zu erzeugende Sendung in den Originalaufträgen der entsprechenden Sendung in dem Verarbeitungsauftrag eindeutig zugeordnet wird, um basierend auf der Zuordnung die Verfolgung einer Sendung aus dem Originalauftrag während deren Verarbeitung zu ermöglichen.

Die vorliegende Erfindung schafft ein Verfahren zur Verfolgung von Sendungen bei deren Erzeugung durch eine oder mehrere Verarbeitungsanlagen, mit folgenden Schritten:
Bereitstellen zumindest eines Originalauftrags, der eine Mehrzahl von zu erzeugenden Sendungen umfasst;
abhängig von vorbestimmten Eigenschaften der Sendungen, Erzeugen einer Mehrzahl von Verarbeitungsaufträgen, wobei jeder der Verarbeitungsaufträge zumindest eine zu erzeugende Sendung aus dem Originalauftrag umfasst; und
Verarbeiten der Verarbeitungsaufträge durch die eine oder die mehreren Verarbeitungsanlagen, um die jeweiligen Sendungen aus dem Originalauftrag zu erzeugen;
wobei jede zu erzeugende Sendung in dem Originalauftrag der entsprechenden Sendung in einem der Verarbeitungsaufträge eindeutig zugeordnet wird, um basierend auf der Zuordnung die Verfolgung einer Sendung aus dem Originalauftrag während deren Verarbeitung zu ermöglichen.

Die vorliegende Erfindung schafft eine Vorrichtung zur Erzeugung einer Mehrzahl von Sendungen, mit:
einer oder mehreren Verarbeitungsanlagen; und
einer Steuerung, die wirksam ist, um die eine oder mehreren Verarbeitungsanlagen gemäß einem Verfahren gemäß Ausführungsbeispielen der Erfindung zu betreiben.

Die vorliegende Erfindung schafft ein computerlesbares Medium mit einem Programmcode, der Anweisungen aufweist, die, wenn der Programmcode durch einen Computer ausgeführt wird, ein Verfahren gemäß Ausführungsbeispielen der Erfindung durchzuführen.

Weitere Ausführungsbeispiele sind in den Unteransprüchen definiert.

Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines bekannten Mailrooms, der durch einen Dienstanbieter oder Dienstleister betrieben wird;
- Fig. 2: eine schematische Darstellung eines Mailrooms gemäß einem Ausführungsbeispiel der Erfindung;
- Fig. 3: ein Flussdiagramm des Verfahrens gemäß einem Ausführungsbeispiel der Erfindung;
- Fig. 4: ein Beispiel für die Zuordnung von Referenzen zwischen Originalaufträgen und vermischten Druckaufträgen, wobei Fig. 4(a) ein Beispiel für eine Sendungsliste für die Originalaufträge zeigt, und wobei Fig. 4(b) eine Sendungsliste für die vermischten Druckaufträge zeigt;
- Fig. 5: Beispiele für Zuordnungen der Sendungen in den Originalaufträgen zu den Sendungen in den vermischten Druckaufträgen, wobei Fig. 5(a) die Sendungsliste aus Fig. 4(a) zeigt, die um eine Identifizierungsliste und eine Referenzliste ergänzt wurde, und wobei Fig. 5(b) zeigt die entsprechend ergänzte Sendungsliste für die vermischten Druckaufträge zeigt; und
- Fig. 6: eine schematische Darstellung eines Mailrooms gemäß einem weiteren Ausführungsbeispiel der Erfindung.

Nachfolgend werden Ausführungsbeispiele der Erfindung anhand der beiliegenden Zeichnungen näher erläutert, wobei gleiche oder gleichwirkende Elemente in den Zeichnungen mit dem gleichen Bezugszeichen versehen sind.

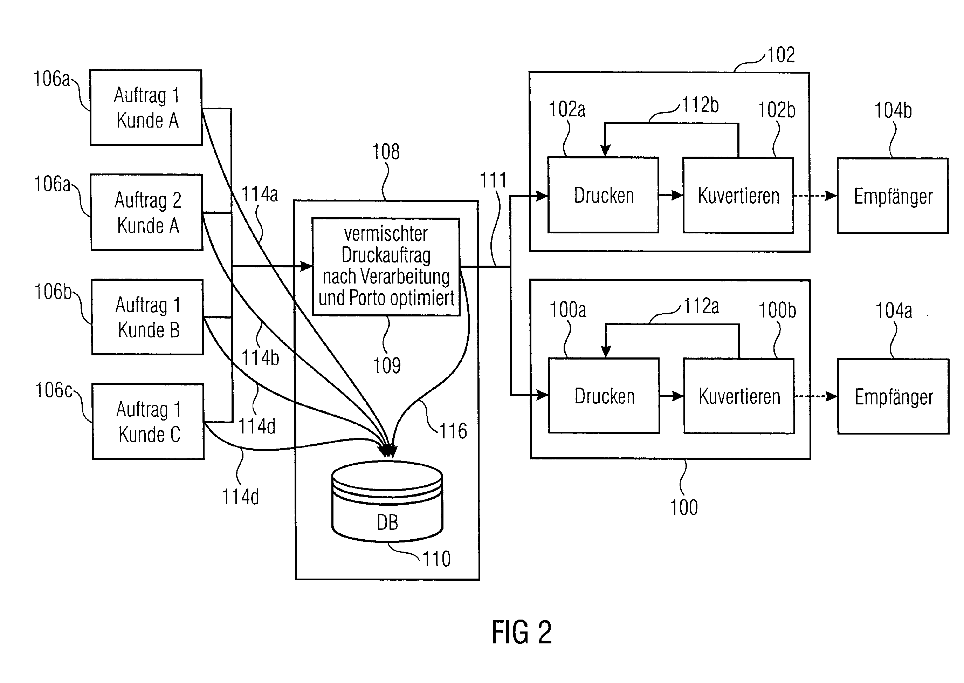

Fig. 2 zeigt eine schematische Darstellung eines Mailrooms, wie er beispielsweise durch einen Dienstanbieter bereitgestellt wird, ähnlich zu der in Fig. 1 gezeigten Anordnung. Erfindungsgemäß werden die durch die Kunden 106a-106c bereitgestellten Aufträge an der Steuerung 108 empfangen, und Sendungslisten der entsprechenden Aufträge werden der Datenbank 110 bereitgestellt, wie dies durch die Pfeile 114a-114d verdeutlicht ist. Durch die Verarbeitungseinrichtung 109 der Steuerung 108 wird der vermischte Druckauftrag 111 erzeugt, und eine Sendungsliste für den vermischten Druckauftrag 111 wird der Datenbank 110 bereitgestellt, wie es durch den Pfeil 116 angedeutet ist. Die oben im Zusammenhang mit der Fig. 1 beschriebene Lücke, die sich aufgrund der Aufteilung der Sendungen aus den verschiedenen Kundenaufträgen in eine oder mehrere vermischte Druckaufträge ergibt, wird erfindungsgemäß vermieden, indem jede zu erzeugende Sendung in den eingehenden Aufträgen einer entsprechenden Sendung in einem vermischten Druckauftrag oder Verarbeitungsauftrag 111 eindeutig zugeordnet wird. Beispielsweise erfolgt dies durch Referenzen zwischen den eingehenden Aufträgen und der zugehörigen Sendung sowie der optimierten Verarbeitungseinheit, beispielsweise unter Verwendung einer geänderten Sendungsnummer, die in einer Referenztabelle festgehalten wird und über die Referenztabelle dem Ursprungsauftrag zugeordnet ist. Diese Zuordnung zwischen der Sendung aus dem Originalauftrag und der Sendung in dem vermischten Druckauftrag ermöglicht, dass jederzeit der aktuelle Verarbeitungsstand auf den ursprünglichen Auftrag sendungsgenau abgebildet werden kann. Selbst wenn Sendungen aus unterschiedlichen Aufträgen eines Kunden in ein Kuvert gepackt werden, wird dies erkannt und kann in der entsprechenden Rückmeldung berücksichtigt werden. Erfolgt eine Erfassung der Sendungen bis zum Empfänger oder verzögert sich die Produktion einzelner Sendungen durch Nachdrucke, so wird dies ebenfalls erkannt, und in der Fortschrittsmeldung entsprechend abgebildet.

Für den Dienstleister ergibt sich die Möglichkeit weiterer Einsparungen, da nun eine optimale Verteilung der empfangenen Sendungen auf die Verarbeitungsanlagen ohne Weiteres möglich ist, da die Kunden stets über den Fortschritt informiert werden können, so dass sich die Möglichkeit ergibt, die durch die Optimierung erzielten Einsparungen an die Auftraggeber weiterzugeben.

Somit werden gemäß Ausführungsbeispielen der Erfindung durch die Steuerung 108 die empfangenen Originalaufträge oder Druckaufträge unter den Gesichtspunkten einer Optimierung der Verarbeitung, z.B. hinsichtlich Kuvertgröße, Porto, Material und ähnlichem, zusammengefasst, um einen oder mehrere neue Druckaufträge, die sogenannten Verarbeitungsaufträge oder vermischten Druckaufträge, zu erzeugen. Sowohl die Originalaufträge als auch der vermischte Druckauftrag enthalten Sendungen, wobei entsprechende Sendungslisten an die Steuerung 108 übergeben werden, wie dies durch die Pfeile 114 und 116 gezeigt ist, und in der Steuerung 108 erfolgt die oben genannte Zuordnung der Sendungen in den Originalaufträgen und in den vermischten Druckauftrag, so dass über die Steuerung 108 die Sendungen in den vermischten Aufträgen, die durch die Steuerung 108 verfolgt werden können, den entsprechenden Originalaufträgen zugeordnet werden können, wodurch eine Feststellung des Fortschritts hinsichtlich der Verarbeitung der Einzelsendungen ermöglicht wird.

Erfindungsgemäß wird somit ein Ansatz geschaffen, der eine Rückverfolgbarkeit von Kundenaufträgen auch bei mehrstufigen Fertigungsverfahren mit Neudruck und einer Optimierung der Aufträge nach Verarbeitungs- und Versandkriterien ermöglicht, wobei insbesondere vorteilhaft ist, dass der Fortschritt hinsichtlich der Abarbeitung der Originalaufträge oder ursprünglichen Druckaufträge ohne Weiteres ermittelt werden kann, die Nachverfolgung von Sendungen aus den ursprünglichen Aufträgen möglich ist, bei gleichzeitiger Optimierung der Verarbeitungsanlagen, beispielsweise hinsichtlich der Materialkosten. Ausführungsbeispiel ermöglichen somit die Anzahl der aus dem Originalauftrag tatsächlich verarbeiteten Sendungen basierend auf der eindeutigen Zuordnung zu bestimmen, so dass eine Rückverrechnung von Porto oder Materialkosten an die Kunden ermöglicht wird bzw. eine genaue Abrechnung nur derjenigen Sendungen, die tatsächlich erzeugt wurden.

Gemäß einem weiteren Ausführungsbeispiel können die Sendungen aus einem oder mehreren Originalaufträgen unter Berücksichtigung von Vorgaben eines Zustelldienstes zusammengefasst werden, um z.B. einen Rabatt beim Porto für die Zustellung zu den Empfängern zu erhalten. Beispielsweise können die Sendungen aus einem oder mehreren Originalaufträgen entsprechend der Zielgebiete (z.B. entsprechend der Postleitzahlen oder eines Teils der Postleitzahlen der Empfängeradressen) zusammengefasst und gemeinsam verarbeitet werden, so dass beim Zustelldienst kein Sortieren nach dem Zustellbereich erforderlich ist, was einen Rabatt auf das Porto für die Sendungen bewirkt. Alternativ können auch Sendungen mit gleicher Größe oder gleichem Gewicht zusammengefasst werden, so dass beim Zustelldienst keine Sortieren nach der Größe oder dem Gewicht erforderlich, was auch zu einer Reduzierung des Portos durch den Zustellanbieter führt, aufgrund des reduzierten Aufwandes bei der Verarbeitung dieser Sendungen durch den Zustelldienst. Aufgrund der erfindungsgemäßen Zuordnung der zusammengefassten Sendungen zu den Sendungen in dem einen oder den mehreren Originalaufträgen können nun auch die oben genannten Rabatte jeder Sendung in dem Originalauftrag zugeordnet werden.

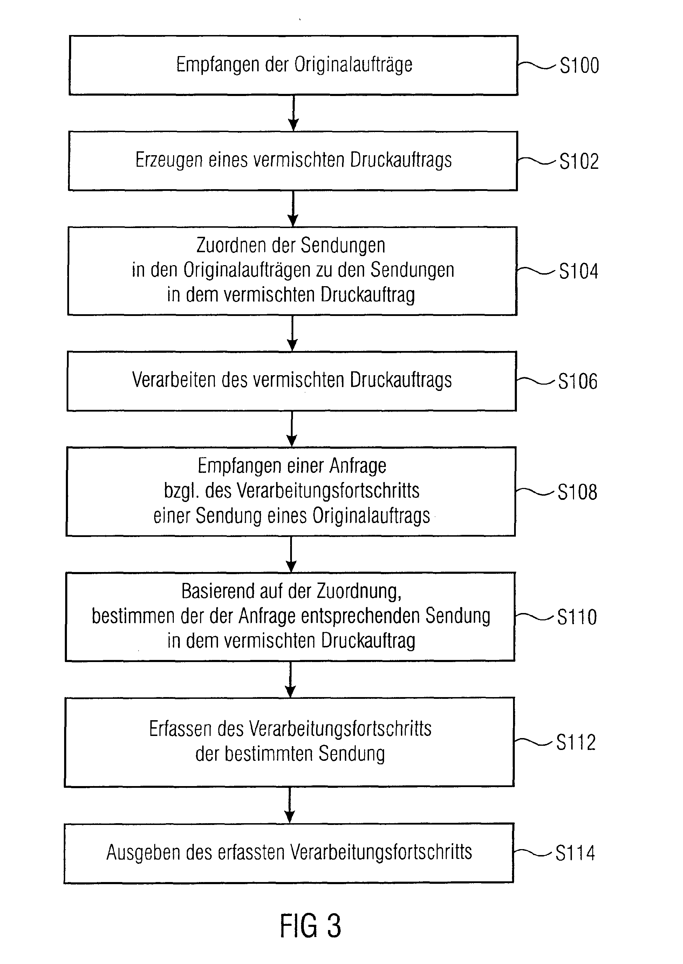

Das anhand von Fig. 2 beschriebene Ausführungsbeispiel wurde im Zusammenhang mit einem Mailroom-Dienstleister erläutert, es sei jedoch darauf hingewiesen, dass die vorliegende Erfindung nicht auf dieses Einsatzgebiet beschränkt ist. Vielmehr findet der erfindungsgemäße Ansatz auch beim Einsatz einer oder mehrerer Verarbeitungsanlagen innerhalb eines Unternehmens, beispielsweise innerhalb einer Bank oder innerhalb einer Versicherung, Einsatz. In diesem Fall empfängt die Verarbeitungsanlage bzw. die mehreren Verarbeitungsanlagen verschiedene unternehmensinterne Aufträge, die in einem vermischten Druckauftrag zusammengefasst werden können, um die Verarbeitung der unterschiedlichen internen Aufträge zu optimieren, wiederum hinsichtlich der Einsatzmöglichkeiten der verfügbaren Verarbeitungsanlagen und/oder hinsichtlich des Zielgebiets, an die die Sendungen gerichtet sind. Auch hierdurch ergibt sich bei internen Anwendungen eine Optimierung der Ressourcen bei der gleichzeitigen Möglichkeit, trotz der Vermischung der Einzelaufträge die einzelnen Sendungen während der Verarbeitung nachzuverfolgen. Anhand der Fig. 3 wird ein Ausführungsbeispiel des erfindungsgemäßen Verfahrens näher erläutert. Im Schritt S100 werden ein oder mehrere Aufträge 105a-105c, die sogenannten Originalaufträge, empfangen, wobei jeder Auftrag eine Mehrzahl von Sendungen definiert, die zu erzeugen und an einen Empfänger 104a, 104b weiterzuleiten sind. Die Sendungen enthalten Daten, die die zu erzeugende und weiterzuleitende Sendung definieren, beispielsweise die aufzudruckenden Daten, Informationen über die Größe der zu verwendenden Einzelblätter oder der zu verwendenden Kuverts, Aufdrucke auf das Kuvert und ähnliches. Die in den unterschiedlichen Originalaufträgen enthaltenen Sendungen werden der Steuerung 108 bereitgestellt und im Schritt S102 werden die empfangenen Sendungen aus den Originalaufträgen für eine Optimierung der Verarbeitung und/oder des Versandes derselben in einem oder mehreren vermischten Druckaufträgen zusammengefasst, wobei für die nachfolgende Beschreibung angenommen sei, dass die aus den empfangenen Kuvertaufträgen erhaltenen Sendungen in einen vermischten Druckauftrag zusammengefasst werden. Die Sendungsliste betreffend den vermischten Druckauftrag wird, ähnlich wie die Sendungslisten betreffend die Originalaufträge, der Datenbank 110 bereitgestellt, und ferner erfolgt durch die Steuerung 108 eine Zuordnung der Sendungen in den Originalaufträgen zu den Sendungen in dem vermischten Druckauftrag, beispielsweise durch Zuordnen entsprechender Referenzen oder Identifizierungen zu jeder Sendung in dem Originalauftrag und durch Zuordnen einer entsprechenden Identifizierung zu der entsprechenden Sendung in dem vermischten Druckauftrag, wie dies im Schritt S 104 gezeigt ist.

Alternativ zu der oben beschriebenen Vorgehensweise, kann gemäß Ausführungsbeispielen vorgesehen sein, das nur ein Originalauftrag erhalten wird, der mehrere zu erzeugende Sendungen umfasst, z.B. Sendungen unterschiedlicher Größe. In diesem Fall werden die Sendungen auf mehrere Verarbeitungsaufträge, z.B. abhängig von der Größe der Sendungen, verteilt und verarbeitet. Auch in diesem Fall werden die Sendungen auf die oben beschriebenen Art den Sendungen in den vermischten Verarbeitungsaufträgen zugeordnet.

Ferner kann gemäß weiteren Ausführungsbeispielen vorgesehen sein, eine Sendung aus dem Originalauftrag bei deren Verarbeitung aufzuteilen, z.B. wenn die Anzahl der Blätter der Sendung die durch die Verarbeitungsanlage handhabbare Anzahl überschreitet, z.B. die maximale Anzahl von Blättern, die ein Falzwerk oder eine Sammelstation gleichzeitig verarbeiten kann. In einem solchen Fall wird die Sendung in dem vermischten Verarbeitungsauftrag in zwei oder mehr Sendungen (Teilsendungen) aufgeteilt. Die aufgeteilten Sendungen werden ebenso wie die nicht aufgeteilten Sendungen ihrer entsprechenden Sendung in dem Originalauftrag zugeordnet (jede Teilsendung ist der entsprechenden Sendung in dem Originalauftrag zugeordnet).

Anschließend erfolgt im Schritt S106 die Verarbeitung des vermischten Druckauftrages, indem der vermischte Druckauftrag einer oder mehreren der Verarbeitungsanlagen 100, 102 zur Erzeugung der Einzelsendungen bereitgestellt wird.

Während der Abarbeitung des vermischten Druckauftrages kann ein Auftraggeber wünschen, über den Fortschritt der Abarbeitung seines Auftrags bzw. einer Sendung eines Originalauftrags informiert zu werden, und eine entsprechende Anfrage wird im Schritt S 108 empfangen. Ansprechend auf die Anfrage im Schritt S108 erfolgt im Schritt S 110 ein Zugriff auf die Steuerung 108, um basierend auf den Informationen des Auftraggebers über die Sendung in dem Originalauftrag die entsprechende Sendung in dem vermischten Druckauftrag zu lokalisieren. Im Schritt S112 wird der Verarbeitungsfortschritt dieser Sendung erfasst und im Schritt S 114 an den anfragenden Kunden ausgegeben. Der Verarbeitungsfortschritt kann beispielsweise anzeigen, dass eine Verarbeitung der Sendung noch nicht begonnen hat, dass die Sendung bereits verarbeitet wird oder die Verarbeitung bereits abgeschlossen wurde. Anstelle der Nachfrage nach dem Verarbeitungszustand einzelner Sendungen kann der Auftraggeber auch den Verarbeitungsfortschritt des Gesamtauftrags erfragen. Der Verarbeitungsfortschritt des Originalauftrag wird erhalten, indem für die Sendungen des Originalauftrags über die diesem zugeordneten Referenzen der Verarbeitungsfortschritt der entsprechenden Sendungen in dem vermischten Druckauftrag erfasst, zusammengefasst und an den Auftraggeber übermittelt wird. Aus den erhaltenen Informationen kann dieser entnehmen, welche der Sendungen noch nicht verarbeitet wurden, welche gerade verarbeitet werden und für welche die Verarbeitung bereits abgeschlossen wurde. Hinsichtlich der Sendungen, die gerade verarbeitet werden, kann ferner angegeben werden, in welchem Stadium der Verarbeitung sich diese befinden, beispielsweise ob die Sendung gerade gedruckt oder kuvertiert wird, den Kuvertierer gerade verlässt.

Bei einer weitergehenden Nachverfolgung bis zum Empfänger können auch diese Informationen an den Auftraggeber weitergegeben werden.

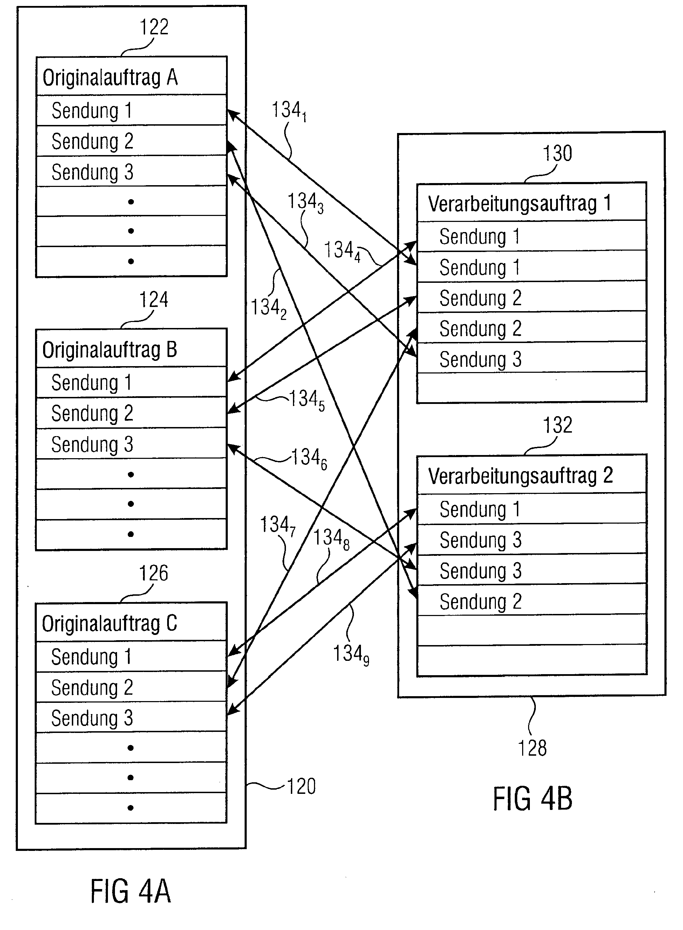

Anhand der Fig. 4 wird nachfolgend ein Beispiel für die Zuordnung von Referenzen zwischen Originalaufträgen und Verarbeitungsaufträgen bzw. vermischten Druckaufträgen näher erläutert. Fig. 4(a) zeigt ein Beispiel für Sendungslisten, die für die Originalaufträge an die Datenbank 110 übergeben werden. Die in Fig. 4(a) gezeigte Sendungsliste 120 umfasst eine Teilliste 122 betreffend einen ersten Auftrag (Originalauftrag A) und die weiteren Teillisten 124, 126, die die Sendungen der Originalaufträge B und C enthalten. In den Teillisten 122-126 sind jeweils die entsprechenden Sendungen aufgeführt, die der Einfachheit halber jeweils als Sendungen 1 bis 3 dargestellt sind. In Fig. 4(b) ist die durch die Verarbeitungseinrichtung 109 der Steuerung 108 an die Datenbank 110 bereitgestellte Sendungsliste 128 für die vermischten Druckaufträge gezeigt, die eine erste Teilliste 130 für einen ersten vermischten Druckauftrag und eine zweite Teilliste 132 für einen zweiten vermischten Druckauftrag umfasst. Abhängig von den Gegebenheiten kann, wie oben bereits erwähnt, auch nur ein vermischter Druckauftrag erzeugt werden, der dann Informationen für die Erzeugung der Sendungen durch unterschiedliche Verarbeitungsanlagen enthält. In diesem Fall enthält die Sendungsliste 128 nur eine Teilliste. Der erste vermischte Druckauftrag (Verarbeitungsauftrag 1) enthält Sendungen aus den unterschiedlichen Originalaufträgen, die entsprechend der oben beschriebenen Kriterien hinsichtlich einer optimalen Verarbeitung und/oder hinsichtlich eines optimalen Versands in diesem Verarbeitungsauftrag 1 zusammengefasst wurden. Der zweite Verarbeitungsauftrag umfasst Sendungen aus den unterschiedlichen Originalaufträgen, die entsprechend anderer Kriterien zusammengefasst wurden. Erfindungsgemäß werden die der Datenbank 110 bereitgestellten Listen 120, 128 verknüpft, wie dies durch die Pfeile 134 gezeigt ist, so dass die in den entsprechenden Verarbeitungsaufträgen 1 und 2 enthaltenen Sendungen den Sendungen in den Originalaufträgen A bis C zugeordnet sind. Die Referenzen sind in Fig. 4 schematisch durch die Pfeile 134₁ bis 134₉ dargestellt. Somit ergibt sich beispielsweise eine eindeutige Zuordnung der Sendung 1 im Originalauftrag A zu der entsprechenden Sendung im Verarbeitungsauftrag 1, wie durch den Pfeil 134₁ gezeigt ist. Auf ähnliche Weise ergibt sich eine entsprechende Zuordnung der verbleibenden Sendungen in den Originalaufträgen.

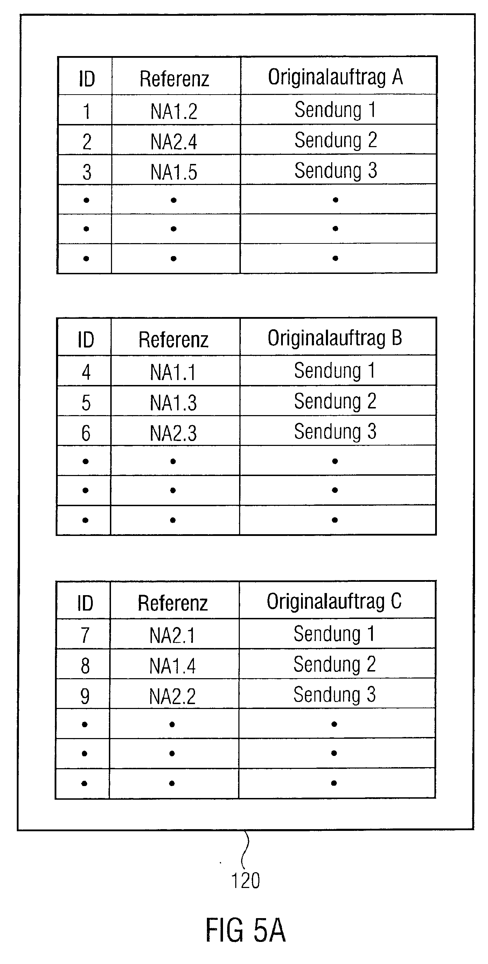

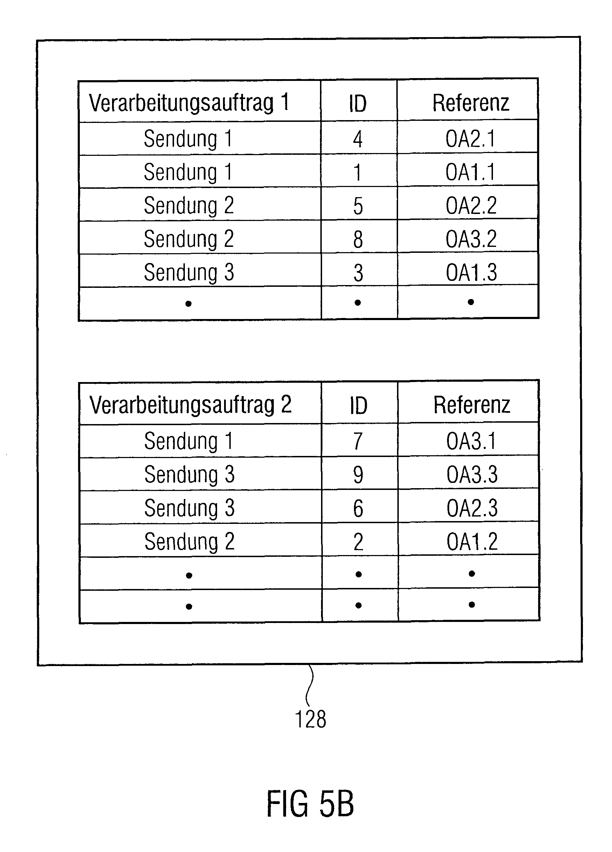

Fig. 5 zeigt Beispiele für mögliche Zuordnungen der Sendungen in den Originalaufträgen zu den Sendungen in den Verarbeitungsaufträgen. Fig. 5(a) zeigt die in der Datenbank 110 gespeicherte Sendungsliste 120 für die Originalaufträge, die gemäß einem ersten Ausführungsbeispiel um eine Identifizierungsliste oder gemäß einem zweiten Ausführungsbeispiel um eine Referenzliste ergänzt wurde. Fig. 5(b) zeigt die entsprechend ergänzte Sendungsliste 128 für die vermischten Druckaufträge. In Fig. 5(a) ist gemäß dem ersten Ausführungsbeispiel vorgesehen, dass jeder Sendung in den Originalaufträgen, die durch die Steuerung 108 empfangen werden, eine eindeutige Identifizierung zugeordnet ist, beispielsweise die Identifizierungsnummern 1 bis 9. Die Steuerung 108 ist ausgebildet, um basierend auf den empfangenen Originalaufträgen und basierend auf den empfangenen vermischten Aufträgen die den Sendungen der Originalaufträge zugeordneten Identifizierungsnummern den entsprechenden Sendungen in den Verarbeitungsaufträgen zuzuordnen, wie dies in Fig. 5(b) gezeigt ist. Hierdurch erfolgt die anhand der Fig. 4 über die Pfeile dargestellte Zuordnung der Sendungen in den Originalaufträgen zu den entsprechenden Sendungen in den Verarbeitungsaufträgen.

Gemäß dem zweiten Ausführungsbeispiel ist vorgesehen, jeder Sendung in einem Originalauftrag eine entsprechende Position in einem der Verarbeitungsaufträge zuzuordnen, und den Sendungen in den Verarbeitungsaufträgen die entsprechende Position in den Originalaufträgen zuzuordnen. Beispielhaft sei die Sendung 1 im Originalauftrag A in der Sendungsliste 120 betrachtet. Diese hat als Referenz VA1.2, was bedeutet, dass diese Sendung der Sendung im Verarbeitungsauftrag 1 an der zweiten Position entspricht. Entsprechende Referenzen finden sich für die übrigen Sendungen. Entsprechend enthält der zweite Eintrag im Verarbeitungsauftrag 1 der Sendungsliste 128 die Referenz OA1.1, was bedeutet, dass die Sendung 1 an dieser Position der Sendung an der Position 1 im Originalauftrag 1 entspricht.

Über die oben beschriebenen Referenzen ist es somit möglich, den gesamten Originalauftrag oder einzelne Sendungen desselben nachzuverfolgen, da über die gezeigten Listen die Zuordnung eindeutig ist, und jederzeit abgerufen werden kann.

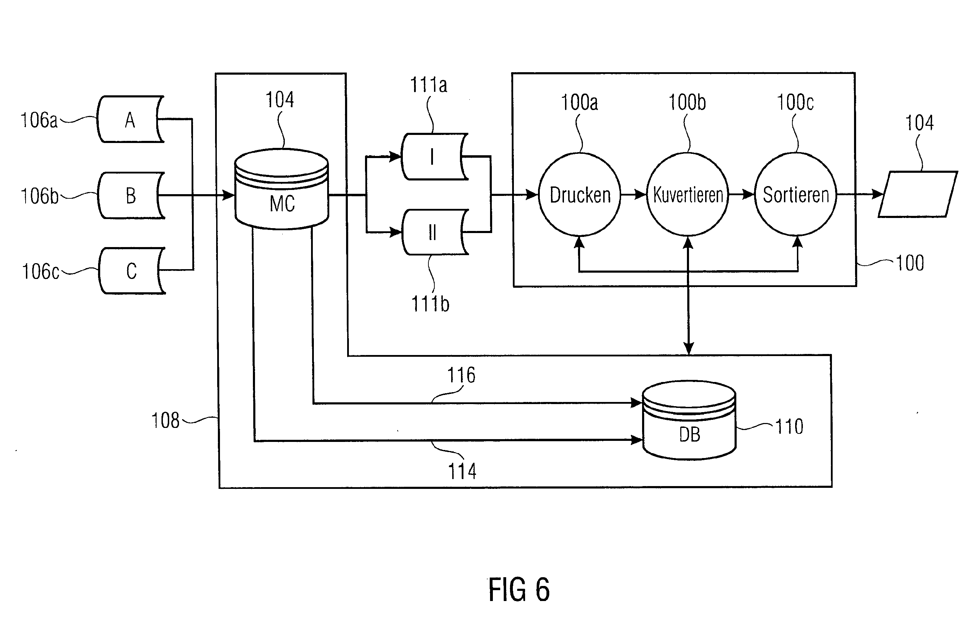

Anhand der Fig. 2 wurde ein Beispiel beschrieben, bei dem mehrere Verarbeitungsanlagen vorgesehen sind, für die ein gemeinsamer vermischter Druckauftrag bereitgestellt wird. Fig. 6 zeigt ein weiteres Ausführungsbeispiel eines Mailroom-Dienstleisters anhand einer schematischen Darstellung. Ähnlich wie in Fig. 1 werden unterschiedliche Aufträge 106a-106c an der Steuerung 108 empfangen, und über eine entsprechende Verarbeitungsstation 109 werden vermischte Druckaufträge 111a und 111b entsprechend vorbestimmter Kriterien erzeugt, wie dies oben erläutert wurde. Über die Vorrichtung 109 werden die Sendungslisten für die Originalaufträge und für die vermischten Druckaufträge an die Datenbank 110 weitergegeben, wie dies durch die Pfeile 114 und 116 dargestellt ist. Auf die oben beschriebene Art und Weise erfolgt eine Zuordnung der Sendungen in den unterschiedlichen Listen zueinander. Bei dem in Fig. 6 dargestellten Ausführungsbeispiel werden, wie erwähnt, zwei vermischte Druckaufträge 118a und 118b erzeugt, die entsprechend unterschiedlicher Kriterien zusammengestellt wurden, beispielsweise um eine optimale Anordnung der zu erzeugenden Einzelblätter auf einer Papierbahn sicherzustellen, die durch den Drucker 100a der Verarbeitungsanlage 100 erzeugt wird. Die Papierbahn kann beispielsweise in Form einer Rolle dem Drucker 100a bereitgestellt werden, der dann die Papierbahn entsprechend den vermischten Druckaufträgen bedruckt. Die Papierbahn kann dann online oder offline den verbleibenden Komponenten der Verarbeitungsanlage bereitgestellt werden, beispielsweise dem Kuvertierer 100b, der ein Vereinzeln der auf einer gedruckten Rolle befindlichen Einzelblätter durchführt, die Einzelblätter zu den erwünschten Sendungen zusammenstellt und kuvertiert. Anschließend kann, sofern erwünscht, ein Sortieren erfolgen. Alternativ kann anstelle der optimierten Anordnung der Einzelblätter auf einer Papierbahn auch eine Ansteuerung eines Einzelblattdruckers 100a durchgeführt werden, so dass die erfolgten Einzelblätter im Onlinebetrieb optimal an die nachfolgenden Verarbeitungsanlagen bereitgestellt werden.

Bei dem in Fig. 6 gezeigten Ausführungsbeispiel werden, wie erwähnt, zwei vermischte Druckaufträge 118a und 118b erzeugt, wo gemäß dem dargestellten Ausführungsbeispiel zunächst der erste Druckauftrag 118a an die entsprechend eingestellte Anordnung 100 bereitgestellt wird, und die so erzeugten Sendungen an den Empfänger 104 weitergeleitet werden. Nach Abarbeitung des ersten vermischten Druckauftrags 118a wird die Anlage 100 zur Verarbeitung der Sendungen gemäß dem vermischten Druckauftrag 118b umgerüstet und anschließend wird dieser Druckauftrag durch die Anlage 100 verarbeitet. Gemäß weiteren Ausführungsbeispielen, gemäß denen eine oder mehrere zusätzliche Verarbeitungsanlagen vorgesehen sind, können die vermischten Druckaufträge 118a und 118b auch parallel verarbeitet werden.

Wie in Fig. 6 ferner zu erkennen ist, dient die Steuerung 108 ferner dazu, die einzelnen Komponenten der Verarbeitungsanlage 100 zu steuern, wie dies durch die entsprechenden Pfeile dargestellt ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Verfolgung von Sendungen, die durch eine oder mehrere Verarbeitungsanlagen (100, 102) erzeugt werden, mit folgenden Schritten:
Bereitstellen (S100) einer Mehrzahl von Originalaufträgen, wobei jeder der Originalaufträge eine Mehrzahl von zu erzeugenden Sendungen umfasst;
abhängig von vorbestimmten Eigenschaften der Sendungen, Erzeugen (S 102) zumindest eines Verarbeitungsauftrags (111, 111a, 111b), wobei der Verarbeitungsauftrag (111, 111a, 111b) zumindest eine zu erzeugende Sendung aus unterschiedlichen Originalaufträgen umfasst; und
Verarbeiten (S106) des Verarbeitungsauftrags (111, 111a, 111b) durch die eine oder die mehreren Verarbeitungsanlagen (100, 102), um die jeweiligen Sendungen aus den Originalaufträgen zu erzeugen;
**dadurch gekennzeichnet, dass**
jede zu erzeugende Sendung in den Originalaufträgen der entsprechenden Sendung in dem Verarbeitungsauftrag (111, 111a, 111 b) eindeutig zugeordnet wird (S 104), um basierend auf der Zuordnung die Verfolgung (S108-S114) einer Sendung aus dem Originalauftrag während deren Verarbeitung zu ermöglichen.

2. Verfahren zur Verfolgung von Sendungen, die durch eine oder mehrere Verarbeitungsanlagen (100, 102) erzeugt werden, mit folgenden Schritten:
Bereitstellen (S 100) zumindest eines Originalauftrags, der eine Mehrzahl von zu erzeugenden Sendungen umfasst;
abhängig von vorbestimmten Eigenschaften der Sendungen, Erzeugen (S 102) einer Mehrzahl von Verarbeitungsaufträgen (111, 111a, 111b), wobei jeder der Verarbeitungsaufträge (111, 111a, 111 b) zumindest eine zu erzeugende Sendung aus dem Originalauftrag umfasst; und
Verarbeiten (S 106) der Verarbeitungsaufträge (111, 111a, 111 b) durch die eine oder die mehreren Verarbeitungsanlagen (100, 102), um die jeweiligen Sendungen aus dem Originalauftrag zu erzeugen;
**dadurch gekennzeichnet, dass**
jede zu erzeugende Sendung in dem Originalauftrag der entsprechenden Sendung in einem der Verarbeitungsaufträge (111, 111a, 111 b) eindeutig zugeordnet wird (S104), um basierend auf der Zuordnung die Verfolgung (S108-S114) einer Sendung aus dem Originalauftrag während deren Verarbeitung zu ermöglichen.

3. Verfahren nach Anspruch 1 oder 2, bei dem das Zuordnen folgendes umfasst:
Zuordnen einer eindeutigen Identifizierung zu jeder Sendung in einem Originalauftrag, und Zuordnen der eindeutigen Identifizierung zu der entsprechenden Sendung in einem Verarbeitungsauftrag (111, 111a, 111 b).

4. Verfahren nach Anspruch 1 oder 2, bei dem das Zuordnen folgendes umfasst:
Zuordnen einer ersten eindeutigen Identifizierung zu jeder Sendung in einem Originalauftrag, wobei die erste eindeutige Identifizierung die einer Sendung in dem Originalauftrag entsprechende Sendung in einem Verarbeitungsauftrag (111, 111a, 111b) identifiziert, und/oder Zuordnen einer zweiten eindeutigen Identifizierung zu jeder Sendung in einem Verarbeitungsauftrag (111, 111a, 111b), wobei die zweite eindeutige Identifizierung die einer Sendung in dem Verarbeitungsauftrag (111, 111a, 111b) entsprechende Sendung in einem Originalauftrag identifiziert.

5. Verfahren nach Anspruch 3 oder 4, bei dem die Identifizierung auf die bei der Verarbeitung erzeugte Sendung aufgedruckt wird, oder bei dem die Identifizierung einer Sendungs-ID, die der durch die Verarbeitung erzeugten Sendung zugeordnet ist, zugeordnet wird.

6. Verfahren nach einem der Ansprüche 3 bis 5, bei dem das Zuordnen ein Speichern des Originalauftrags, des Verarbeitungsauftrags (111, 111a, 111b) und der Identifizierungen in einer Steuerung (108) umfasst, wobei für eine Verfolgung einer Sendung auf die Steuerung (108) zugegriffen wird.

7. Verfahren nach einem der Ansprüche 1 bis 6, bei dem das Verfolgen einer Sendung anzeigt, ob deren Verarbeitung begonnen hat, ob sie verarbeitet wird, oder ob deren Verarbeitung abgeschlossen ist.

8. Verfahren nach Anspruch 7, bei dem bei der Verarbeitung der Sendung ein Verarbeitungsfortschritt angezeigt wird (S114).

9. Verfahren nach einem der Ansprüche 1 bis 8, bei dem jede der Sendung ein oder mehrere bedruckte Blätter definiert, die zu erzeugen sind, wobei jedem bedruckten Blatt eine Abmessung und Druckdaten zugeordnet sind.

10. Verfahren nach einem der Ansprüche 1 bis 9, bei dem ein Verarbeitungsauftrag (111, 111a, 111b) derart erzeugt wird, dass eine zur Erzeugung der Sendungen verwendete Verarbeitungsanlage (100, 102) optimal arbeitet.

11. Verfahren nach einem der Ansprüche 1 bis 10, bei dem Sendungen aus dem Originalauftrag mit gleicher Größe, gleichem Porto, gleichem Material und/oder gleichem Zielgebiet in einen Verarbeitungsauftrag (111, 111a, 111b) zusammengefasst werden.

12. Verfahren nach Anspruch 11, bei dem das Erzeugen eines Verarbeitungsauftrags (111, 111a, 111b) das Erzeugen mehrerer Druckströme umfasst, um bedruckte Blätter für die Sendungen derart zu erzeugen, dass die bedruckten Blätter optimal auf einer der Verarbeitungsanlage (100, 102) bereitgestellten Papierbahn angeordnet sind, oder dass die bedruckten Blätter durch einen Einzeldrucker in einer optimalen Reihenfolge für die Verarbeitung durch die Verarbeitungsanlage (100, 102) erzeugt werden.

13. Verfahren nach einem der Ansprüche 1 bis 12, bei dem das Verarbeiten eines Verarbeitungsauftrags (111, 111a, 111 b) ein Drucken, ein Kuvertieren, ein Sortieren und/oder ein Frankieren umfasst.

14. Verfahren nach einem der Ansprüche 1 bis 13, bei dem das Verarbeiten eines Verarbeitungsauftrags (111, 111a, 111b) ein Drucken der Sendung und nachfolgendes Verarbeiten der Sendung umfasst, wobei in dem Fall, dass das Drucken oder die nachfolgende Verarbeitung der Sendung fehlerhaft ist, ein Neudruck der Sendung durchgeführt wird, wobei die der fehlerhaften Sendung zugeordnete Identifizierung ansprechend auf den Neudruck der neuen Sendung zugeordnet wird, so dass die eindeutige Zuordnung der neuen Sendung zu der entsprechenden Sendung in dem Originalauftrag beibehalten wird.

15. Verfahren nach einem der Ansprüche 1 bis 14, bei dem basierend auf der eindeutigen Zuordnung die Anzahl der aus dem Originalauftrag tatsächlich verarbeiteten Sendungen bestimmt wird.

16. Verfahren nach einem der Ansprüche 1 bis 15, bei dem eine Mehrzahl von Verarbeitungsanlagen (100, 102) bereitgestellt wird, um zwei oder mehr Verarbeitungsaufträge (111, 111a, 111b) parallel zu verarbeiten.

17. Verfahren nach einem der Ansprüche 1 bis 16, bei dem die Verarbeitungsanlage (100, 102) durch einen Dienstanbieter betrieben wird, der die Originalaufträge von unterschiedlichen Auftraggebern empfängt.

18. Verfahren nach einem der Ansprüche 1 bis 17, bei dem eine Mehrzahl von Originalaufträgen bereitgestellt wird, bei dem ein oder mehrere Verarbeitungsaufträge (111, 111a, 111b) erzeugt werden, und bei dem ein Verarbeitungsauftrag (111, 111a, 111b) Sendungen für die Verarbeitung durch eine oder mehrere Verarbeitungsanlagen (100, 102) umfasst.

19. Verfahren nach einem der Ansprüche 1 bis 18, bei dem das Erzeugen eines Verarbeitungsauftrags (111, 111a, 111b) ein Aufteilen einer oder mehrerer Sendungen aus einem Originalauftrag in mehrere Teilsendungen umfasst, wobei die mehreren Teilsendungen eindeutig der entsprechenden Sendung in dem Originalauftrag zugeordnet werden.

20. Computerlesbaren Medium mit einem Programmcode, der Anweisungen aufweist, die, wenn der Programmcode durch einen Computer ausgeführt wird, ein Verfahren nach einem der Ansprüche 1 bis 19 durchzuführen.

21. Vorrichtung zur Erzeugung einer Mehrzahl von Sendungen, mit:
einer oder mehreren Verarbeitungsanlagen (100, 102); und
einer Steuerung (108), die wirksam ist, um die eine oder mehreren Verarbeitungsanlagen (100, 102) gemäß dem Verfahren nach einem der Ansprüche 1 bis 19 zu betreiben.
